# EUROPEAN PATENT APPLICATION

(11) **EP 2 208 564 A1**
(43) Date of publication of application: **21.07.2010**
(21) Application number: 08837825.2
(22) Date of filing: 09.10.2008
(51) Int. Cl.: B23D 49/16

(54) **SAW EQUIPMENT**

(30) Priority: 11.10.2007 ES 200702672
(71) Applicant: Cañas y Gomez, S.L., 36350 Nigrán (Pontevedra) (ES)
(72) Inventor: CAÑAS FONTAN, José, E-36350 Nigrán (Pontevedra) (ES)
(74) Representative: Carvajal y Urquijo, Isabel
(86) International application number: PCT/ES2008/000632
(87) International publication number: WO 2009/047378

(57) **Abstract**

Saw equipment which is applicable to saws which incorporate a jig saw blade or disk, enabling to carry out cuts with variation in the inclination of the cuts by placing the saw or disk with those inclinations with respect to a support base which forms part of the saw set.

It is **characterized in that** it incorporates a characteristic first device for precisely and securely setting the saw or disk at the appropriate inclination.

It also includes a second device for also precisely controlling the direction of the cuts.

## Description

### OBJECT OF THE INVENTION

The present invention, as expressed in the heading of this descriptive memory, refers to a saw equipment intended to provide with precision the cutting angle needed to carry out such cuts, either through disk, or through a jig saw blade.

To that end, the saw equipment incorporates a first device so as to be able to regulate with precision cuts at 45°, for example, for later joining two pieces in a straight angle by their cut edges which will be in contact to each other when they are joined together.

This first device allows a fast and simple positioning with total precision without it being necessary to loosen and later tighten a screw, as it conventionally occurs.

In any case, the angle with which the disk or jig saw blade is positioned is attained relatively swinging the saw body with respect to a support base or vice versa.

The saw incorporates a second device to precisely provide the angles to carry out the cuts in horizontal directions, regardless of the cutting angle which is attained through the first device.

In order to apply this second device, the cutting saw set must be associated to a table with a circular measuring scale located in a rotating platform.

The devices are also applicable to already existing machines in the market, doing some simple modifications.

### BACKGROUND OF THE INVENTION

Nowadays, there exist chop saws among which it is worth highlighting those which incorporate means to regulate the cutting angle, so that to that end the saw body will be relatively positioned, together with the blade, with a determined angle with respect to a support base which rests on the surface of one of the faces of the body to be cut, forming said support base part of the chop saw set.

To vary the cutting angle, it is necessary to loosen at least one screw to rotate the saw body with respect to the support base to the required angle and tighten the aforementioned screw again to secure the new stable saw position.

This regulating system is very uncomfortable, but above all imprecise because it does not secure at all the required angle for the cut, so that, when two cut pieces are joined together by the edges corresponding to said cuts the expected result in most cases is not attained.

In other cases, a lever is incorporated to fix the position, so that said lever is acted upon in order to release the swinging of the saw until it is located with the required angle, and that same lever is later acted upon so as to block the position. In this case, there exits the problem that the precision of the position must be visually carried out by making two opposing lines coincide, being practically impossible for that coincidence to be exact, thereby causing that the cutting work done usually turns out defective.

### DESCRIPTION OF THE INVENTION

In order to reach the objectives and avoid the aforementioned inconveniences, the invention proposes a saw equipment which incorporates a positioning device for chop saws or disk saws, either portable, table saws or any other, which is **characterized in that** it is determined from an axially displaceable rod against a spring resistance, rod which is coupled and guided in its displacement in a couple of end bodies, front and rear, both of them integral to a flat base resting on the surface of a board to cut, for example, being located between these two end bodies a central body also coupled to the rod and which is integral to the saw carcass.

The saw blade is located in a front area of the chop saw.

The rod incorporates a first fluting where the central body of the carcass is coupled and a second fluting located in correspondence to the rear end body, so that in normal position both flutings are coupled in complementary fluted hollows of the rear and central body, thereby maintaining the saw stable to carry out the cut needed with the required angle, while when we displace the rod backwards against the spring resistance maintaining it in its backward position, the rear fluting is released, so that it is possible to rotate the saw set together with its central body and rod until finding the required angle with precision. After acting on the rod, it recovers its resting position by the action of the spring, thus securing the new position to do the cut with the required angular inclination.

Thus, to carry out the cut with the required angle a rotating movement is carried out relative to the saw and rod assembly, said rod being released with respect to the rear end body.

The precision of the cutting angle is secured through a curved measuring scale located on a frontal face of the rear body from where an end section of the rod appears, so that it incorporates a vernier scale associated to the curved scale.

The saw equipment is also **characterized in that** it incorporates a second device to precisely locate the saw or disk according to the horizontal direction the saw or disk will follow, regardless of the cutting angle regulated with the first device.

This second device is connected to a circular measuring scale which forms part of a rotating platform of a table where the piece to be cut rests, so that this second device also incorporates a venier scale associated to a circular measuring scale to cut with precision in the required direction.

In a second embodiment, the rod incorporates only one fluting, which in normal position connects with fluted hollows of the rear and central body. In this case, when the blocking is released the saw carcass rotates but not the rod.

In a third embodiment, the rod also has only one fluting, but it connects in complementary fluted hollows of the central and front body, so that the system operation will be the same as in the case of the first embodiment.

Next, to facilitate a better understanding of this descriptive memory and being a part thereof, there are attached some exemplary drawings, in which the object of the invention has been represented in a non-limiting and illustrative way.

### BRIEF DESCRIPTION OF THE DRAWINGS

**Figures 1** to 3 show respective elevated views of the saw equipment, object of the invention.

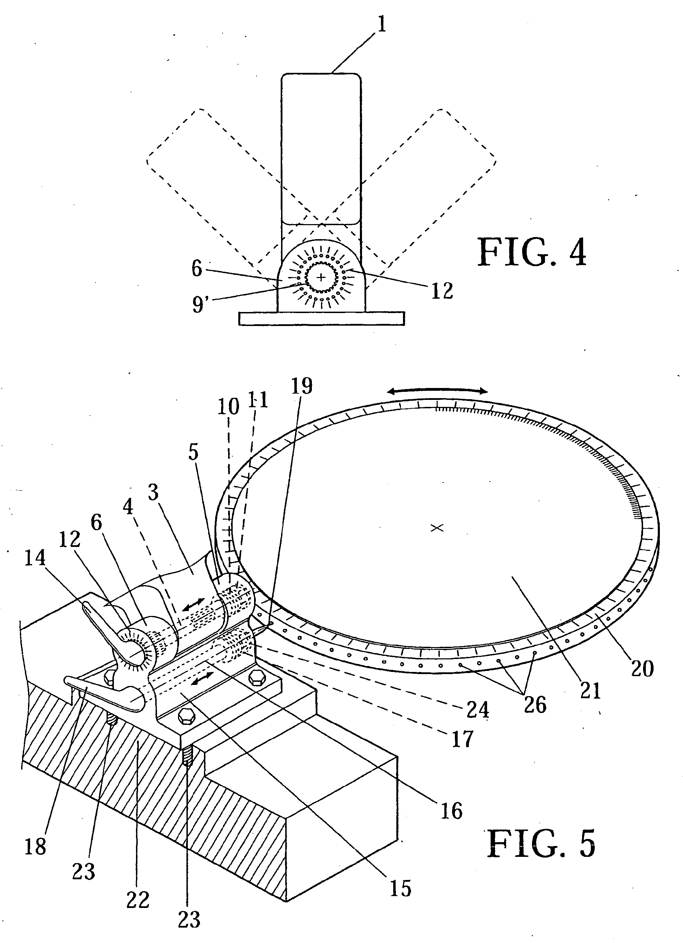

**Figure 4** shows a rear view of what is represented in the preceding figure.
**Figure 5** shows a perspective view of the equipment of the invention.

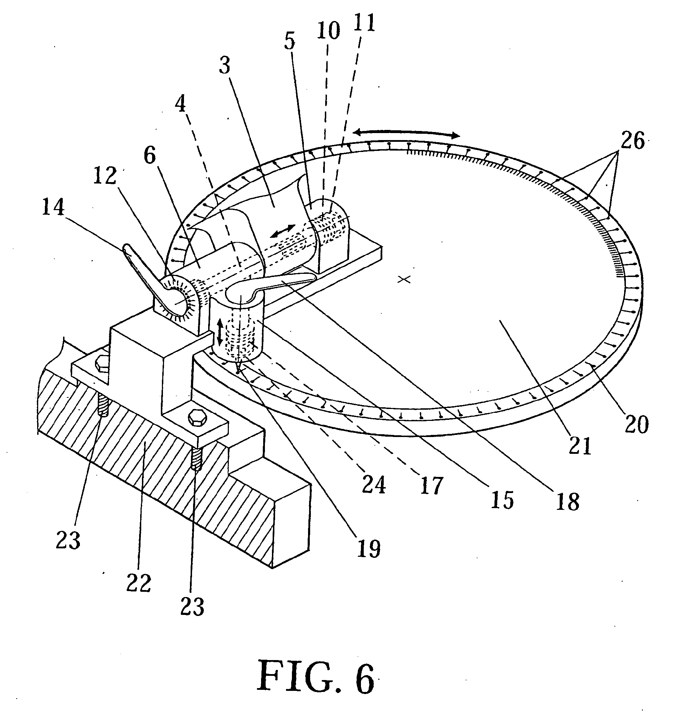

**Figure 6** shows another view of the saw equipment.

### DESCRIPTION OF THE PREFERRED EMBODIMENT

Considering the reference numbering used in the figures, the saw equipment is determined from a carcass 1 which incorporates inside it the engine and other elements to provide the movement of a cutting disk or jig saw blade 2, so that said carcass in turn has a lower centered body 3 coupled in a rod 4 guided and in turn coupled in two end bodies, front 5 and rear 6, both fixed to a support base 7, so that the carcass 1 can be rotated with respect to the rod 4 in order to do cuts with the required inclination.

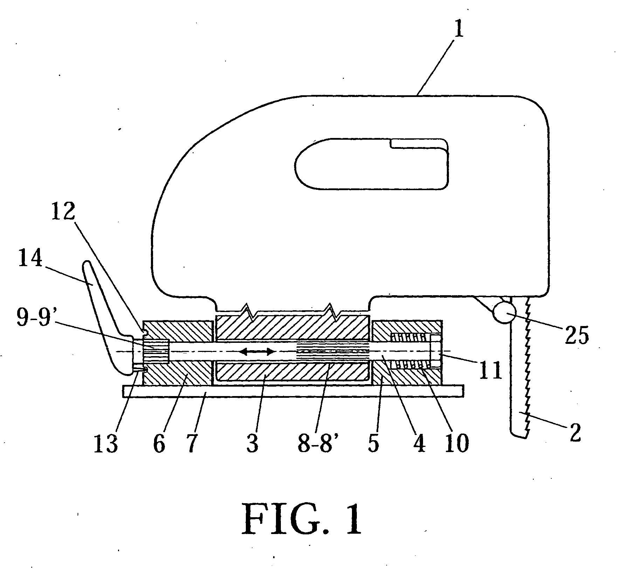

In a first embodiment, essentially shown in figure 1, to set and secure each position, the rod 4 incorporates a first fluting 8 complementary to another fluting 8' established in the central body 3 and a second fluting 9 complementary to a fluting 9' of the rear body 6, so that in a resting position of the rod 4 with axial displacement it will remain in that position by the action of a spring 10 located in a box of the front body 5, spring 10 which presses against a frontal face of the front body 5 and on a nut 11 coupled to such rod 4.

Thus, in order to position the cutting element with the required angle it will be necessary to axially displace the rod 4 towards the back until its end fluting 9 releases the rotation of said rod 4, at which point the carcass 1 will rotate together with the rod 4 until finding the required angular position with the help of a measuring scale 12 established in a frontal face of the rear body 6. Said measuring scale 12 is complemented with a venier scale 13 established in a grip lever 14 integral to a rod 4 end.

Once the required position is attained, the rod 4 is released, recovering its axial resting position thanks to the spring 10, thereby, the end fluting 9 of the rod 4 will fit in the complementary fluting 9' of the rear body 6, thus securing the required stable position with the desired angle to do the corresponding cut.

Besides this first device to regulate the angular position of the cut with the required inclination, the saw equipment incorporates a second device to also attain with precision the desired cutting direction, regardless of the cutting angle regulated through the aforementioned first device.

This second device is coupled to an additional body 15 integral to the end bodies 5 and 6 of the first device, so that in said additional body 15 a longitudinal axis 16 with axial displacement is coupled against the resistance of another spring 17, so that an end of this longitudinal axis 16 has a manipulation lever 18 while the opposite end constitutes a venier scale 19 opposite a circular measuring scale 20 established in a rotating platform 21 where the piece to be cut is fixed, said platform 21 which is coupled on a conventional support table 22. The spring 17 is coupled in a section of the longitudinal axis 16, set at one end against the additional body 15 while the opposite end is set against a nut 24 threaded in the aforementioned longitudinal axis 16.

When the equipment incorporates the two devices, the support base 7 is fixed to the support table 22 by means of screws 23 or other appropriate methods.

In some cases, when the cutting element is a jig saw blade 2, a roller guide 25 is incorporated where the blade rests on its rear part to improve the cutting operation.

The venier scale 19 constitutes a narrow terminal element which can be fitted into complementary holes 26 corresponding to the marks of the circular measuring scale 20, thus obtaining a characteristic and effective locking means to block the position of the rotating platform 21 in a stable manner.

In a second embodiment (figure 2), the rod 4 incorporates only one fluting 8 which in normal position is connected with fluted hollows 8' and 9' of the central body 3 and rear body 6, respectively. In this case, when the blocking is released, the carcass 1 of the saw rotates, but the rod 4 does not. In this case the carcass 1 can incorporate a venier scale 13' which will correspond to a measuring scale 12' located in the rear body 6.

In a third embodiment (figure 3), the rod 4 also has only one fluting 8, but one which fits, in a resting position, in complementary fluted hollows 8' and 5' of the central body 3 and front body 5, respectively, so that the operation system will be practically the same as that of the first embodiment.

The measuring scale 12' and venier scale 13' of the second embodiment can also be applied to the first and third embodiments.

## Claims

1. **Saw equipment,** comprising a carcass which supports an engine and other elements, among which a cutting element is included, such as jig saw blade or disk, also including at least means to place the carcass assembly in a stable manner with a required inclination with respect to a support base connected to the carcass, **characterized in that** the means to place the carcass (1) assembly in a stable manner with respect to the support base (7) comprise a first device determined by a longitudinal rod (4) where some end bodies, front (5) and rear (6), are coupled, both integral to the support base (7), also being coupled to said rod (4) a central body (3) integral to the carcass (1), so that said rod (4) has axial displacement allowing in a position thereof the rotation of the carcass (1), while in the other position it is fixed immobilizing it, blocking the rotation in a stable manner attaining the angle required by the cutting element (2).

2. **Saw equipment,** according to claim 1, **characterized in that** the rod (4) incorporates an end fluting (9) which is complemented by a fluting (9') established in the rear body (6), including said rod another central fluting (8) which is complemented by another fluting (8') of the central body (3), so that in the unblocking position the rod (4) freely rotates with respect to the rear body (6), while in the stable blocking position the rod (4) is blocked in the rear body (6) through the complementary flutings (9', 9) of said rear body (6) and rod (4) respectively.

3. **Saw equipment,** according to claim 1, **characterized in that** the rod (4) incorporates a fluting 8 which is complemented by two fluted hollows (8' and 9') belonging to the central body (3) and rear body (6), respectively.

4. **Saw equipment,** according to claim 1, **characterized in that** the rod (4) incorporates a fluting (8) which is complemented by two fluted hollows (8' and 5') belonging to the central body (3) and front body (6), respectively.

5. **Saw equipment,** according to any of the preceding claims, **characterized in that** the rod (4) maintains its axially stable position against the resistance of a spring (10) located in a box of the front body (5), spring (10) pushing against a frontal surface of the rear body (5) and against a nut (11) threaded in the aforementioned rod (4).

6. **Saw equipment,** according to any of the claims 1, 2 or 4, **characterized in that** the rear body (6) incorporates at least a measuring scale (12) which is complemented by at least one venier scale (13) located at an end of the grip and release lever (14) connected to an end of the rod to facilitate its axial displacement and rotation.

7. **Saw equipment,** according to one of the claims 1 or 3, **characterized in that** the rear body (6) incorporates a measuring scale (12') which is complemented by a venier scale (13') integral to the carcass (1).

8. **Saw equipment,** according to any of the preceding claims, **characterized in that** it includes a second device to control the desired cutting direction, said second device comprising a longitudinal axis (16) in an additional body (15) integral to both end bodies (5 and 6) incorporating the longitudinal axis 16 an end venier scale (19) connected to a circular measuring scale (20) which forms part of a rotating platform (21) coupled on a support table (22), on which the support base (7) is fixed.

9. **Saw equipment,** according to claim 8, **characterized in that** the free end of the longitudinal axis (16) has a manipulation lever (18).

10. **Saw equipment,** according to any of the claims 8 or 9, **characterized in that** the spring (17) is coupled in a section of the longitudinal axis (16), an end resting on a central surface of the additional body (15) while the opposite end rests on a nut (24) threaded on the longitudinal axis (16).

11. **Saw equipment,** according to any of the claims 8 to 10, **characterized in that** the circular measuring scale (20) incorporates holes (26) corresponding to the marks of the circular measuring scale (20), holes where it is possible to fit the end of the venier scale (19).
